# EUROPEAN PATENT SPECIFICATION

(11) **EP 0 603 413 B1**
(45) Date of publication and mention of the grant of the patent: **07.01.1998**
(21) Application number: 93914748.4
(22) Date of filing: 08.07.1993
(51) Int. Cl.: C22C 37/04, H02K 49/04

(54) **INDUCED ROTORS FOR ELECTROMAGNETIC SPEED REDUCERS FABRICATED WITH FERRITIC NODULAR CAST IRON**
INDUZIERTER ROTOR FÜR ELEKTROMAGNETISCHES UNTERSETZUNGSGETRIEBE HERGESTELLT MIT FERRITISCHEM KUGELGRAPHITGESSEISEN
ROTORS INDUITS POUR RALENTISSEURS ELECTROMAGNETIQUES FABRIQUES AVEC DES FONTES NODULAIRES FERRITIQUES

(30) Priority: 09.07.1992 ES 9201411
(43) Date of publication of application: 29.06.1994
(73) Proprietor: FRENOS ELECTRICOS UNIDOS S.A., E-31014 Pamplona (ES)
(72) Inventor: BIKANDI NUNO, Juan Carlos, E-31014 Pamplona (ES); GURIDI IRIZAR, José Ramón, E-31014 Pamplona (ES)
(74) Representative: SUGRANES - VERDONCES - FERREGÜELA
(86) International application number: ES9300062
(87) International publication number: WO9401592

(56) References cited:
- EP-A- 0 318 687
- DE-A- 2 853 870
- GB-A- 2 147 007

## Description

### Field of the invention

The present invention relates to rotors for electromagnetic speed reducers, based on eddy currents (Foucault currents), such as those used in self-propelled vehicles, power test benches for internal combustion engines and other applications, built with ferritic nodular cast iron.

### Prior art

One of the main problems concerning electromagnetic speed reducer rotors consists in their being subjected to strong heating because they have to convert the vehicle kinetic energy into heat under the effect of eddy currents. This means that the design of such rotors requires that their metallic mass be quite heavy, as a result of which the operation thereof leads to a high consumption of mechanical energy, with a negative effect on vehicle fuel consumption.

The Spanish patent 516.263 provides a solution to this problem, consisting of the design of a rotor whose body includes a longer and narrower cooling air channelling system than that of conventional rotors, while the European Patent Application No. O 330,562 describes as a solution the design of a rotor whose ventilation fins are more numerous and thinner than the usual ones.

This kind of solutions has the difficulty that although the kind of material used in the construction of rotors, generally steels, shows good magnetic permeability characteristics, the materials undergo severe structural degradation due to the thermal fatigue produced by the continuous heating and cooling cycles to which the parts are subjected during their normal operation.

It is therefore necessary to use materials having good magnetic permeability which allow the manufacturing of lighter rotors, though with a good heat dissipation capacity and an effective resistance to thermal fatigue.

The US-A- 3,189,492 describes nodular type iron casts having an excellent magnetic permeability, similar to that of steel, but, owing to their low proportion of carbon, they have a poor castability which makes them difficult to work when the objective is to achieve thin parts.

Nodular iron casts of ferritic type are well-known, for example GB-A-2147007, and are used for different applications, but so far they have never been used for manufacturing electromagnetic brake rotors.

The inventors of the present invention have found that using nodular iron casts with a carbon content exceeding 2.5 per cent by weight and having a ferritic matrix resolves the problems described in that while they retain an excellent magnetic permeability, they are extraordinarily resistant to thermal fatigue and they show a very good castability, which allows the manufacturing of electromagnetic brake rotors whose design can be adapted for improving heat dissipation and, at the same time, for reducing the weight of the parts.

### Object of the invention

Therefore, the object of the present invention is to provide electromagnetic brake rotors manufactured with ferritic type nodular cast iron which have a lower weight and an excellent heat dissipation capacity, while showing at the same time, an improved thermal fatigue resistance.

A further object of the present invention consists in providing electromagnetic brake rotors in which the metallic layers forming the parts thereof are notably thinner than those of the known rotors.

### Description of the invention

The rotors of the present invention are characterized in that they are constructed with nodular iron casts with a substantially ferritic matrix, which have the following composition expressed in percentage by weight of their components:
- 2.5 to 4.0 of Carbon
- 1.6 to 4.0 of Silicon
- 0.03 to 0.06 of Magnesium
- Less than 0.3 of Manganese
- Less than 0.3 of Copper
- 0 to 0.7 of Molybdenum

The remaining balance up to 100 is formed by iron and its habitual impurities in the usual proportions.

In such cast iron, the carbon is found in a free state grouped in nodules, and the matrix must be of ferritic nature.

In case the cast iron obtained in function of the various proportions of the components is not of ferritic nature, a ferritization heat treatment has to be done.

The nodular casts of the invention are obtained by known methods by means of melting of the different components until the casting is obtained, followed by the subsequent steps of heat treatment, moulding and cooling, insisting, as before mentioned, on the fact that if the matrix so obtained is not ferritic, then a ferritization heat treatment must be carried out.

So, the parts obtained have a thickness comprised between 3 and 5 mm at the portions corresponding to the ventilation circuits, whereas said thickness is usually greater than 7 mm when employing steels, the thinner pieces being highly effective in the manufacturing of rotors according to the invention.

This, together with the fact that the proportions of carbon and silicon reduce the density of the cast iron parts, allows weight reductions of up to 10 per cent and more.

The rotors so obtained show an excellent thermal fatigue resistance. In order to check this property, they were subjected to tests in which they had undergone up to 400 or 500 heating and cooling cycles over short periods of time, reaching temperatures of up to 700°C.

For better illustrating the invention, and without their being open to interpretation as limitations thereof, the following examples are given hereinafter in which:

### Example 1

Using usually known techniques, by means of melting and mixing of the components, three nodular ferritic cast irons (FN-1, FN-2 and FN-3) were prepared, having the chemical composition shown in Table 1.

**Table 1**

| Component | FN-1 | FN-2 | FN-3 |
|---|---|---|---|
| C | 3.94 | 3.68 | 3.56 |
| Si | 1.68 | 2.17 | 3.44 |
| Mn | 0.105 | 0.058 | 0.255 |
| P | 0.013 | 0.017 | 0.011 |
| S | 0.007 | 0.006 | 0.017 |
| Cr | 0.059 | 0.055 | 0.069 |
| Ni | 0.069 | 0.066 | 0.070 |
| Mo | < 0.0013 | < 0.0013 | 0.704 |
| V | 0.04 | 0.048 | 0.026 |
| W | < 0.009 | < 0.009 | < 0.009 |
| Co | 0.027 | 0.031 | 0.021 |
| Cu | 0.027 | 0.023 | 0.152 |
| Al | 0.040 | 0.038 | 0.037 |
| Ti | 0.020 | 0.027 | 0.019 |
| Mg | 0.059 | 0.051 | 0.028 |
| Nb | 0.002 | < 0.002 | < 0.002 |
| Fe | 94.3 | 94.2 | 92.2 |

The casts obtained had an excellent castability and were moulded in the form of rotor parts, with a truss thickness of 4 mm.

The heat treatment used in the cast irons FN-1 and FN-2 consists in keeping the cast iron at 900°C for 1 hour, cooling down to 750°C at the rate of 50°C per hour, maintaining the temperature at 750°C for a further hour, and then cooling down to 500°C at the rate of 50°C per hour.

The heat treatment for cast iron FN-3 consists in keeping the temperature at 900°C for one hour and a half, cooling down to 750°C at the rate of 50°C per hour, maintaining the temperature at 750°C for a further two hours and a half, and then cooling down to 500°C at the rate of 50°C per hour.

### Example 2

Samples of the parts obtained in Example 1 were subjected to a thermal fatigue test consisting in performing a series of heating and cooling cycles, in each of which the samples were heated to 700°C for 10 minutes, maintained at said temperature for a further 10 minutes and then cooled down again to ambient temperature over a further period of 10 minutes.

Each sample is tested at 400 and at 500 cycles as described hereinbefore and is subjected, according to the specifications of standard UNE 36401, to tensile tests in order to set the following parameters: rupture stress, yield stress, elongation and hardness (using the Brinell hardness test with 3,000 kp load and 10 mm diameter ball).

For comparison, two alloy steels (AA-1 and AA-2), having the chemical composition expressed in Table 2, were subjected to the same tests.

**Table 2**

| Component | AA-1 | AA-2 |
|---|---|---|
| C | 0.16 | 0.22 |
| Si | 0.48 | 0.44 |
| Mn | 0.49 | 0.52 |
| P | 0.017 | 0.020 |
| S | 0.014 | 0.017 |
| Cr | 1.5 | 1.55 |
| Ni | 0.065 | 0.075 |
| Mo | 0.70 | 0.71 |
| V | < 0.01 | 0.20 |
| W | < 0.005 | < 0.005 |
| Co | < 0.01 | < 0.01 |
| Cu | 0.05 | 0.09 |
| Al | 0.090 | 0.10 |
| Ti | < 0.01 | < 0.01 |
| Mg | < 0.01 | < 0.01 |
| Nb | < 0.01 | 0.20 |
| Fe | 96.3 | 96.1 |

The results obtained in the tests are shown in Table 3.

**Table 3**

| Material | Rupture stress (N/mm²) | Yield stress (N/mm²) | Elongation (%) | Hardness (HB) |
|---|---|---|---|---|
| FN-1 | | | | |
| Initial | 359 | 203 | 25 | 117 |
| 400 cycles | 364 | 234 | 26 | 105 |
| 500 cycles | 370 | 233 | 25 | 104 |

| FN-2 | | | | |
|---|---|---|---|---|
| Initial | 393 | 248 | 26 | 131 |
| 400 cycles | 407 | 276 | 26 | 114 |
| 500 cycles | 411 | 276 | 25 | 114 |

| FN-3 | | | | |
|---|---|---|---|---|
| Initial | 529 | 375 | 17 | 177 |
| 400 cycles | 541 | 406 | 19 | 165 |
| 500 cycles | 532 | 396 | 13 | 165 |

| AA-1 | | | | |
|---|---|---|---|---|
| Initial | 652 | 421 | 17 | 150 |
| 400 cycles | 551 | 361 | 26 | 135 |
| 500 cycles | 554 | 360 | 25 | 111 |

| AA-2 | | | | |
|---|---|---|---|---|
| Initial | 750 | 677 | 15 | 194 |
| 400 cycles | 642 | 366 | 22 | 146 |
| 500 cycles | 536 | 304 | 25 | 108 |

As it can be seen, the rotors of the invention manufactured with nodular casts FN-1, FN-2 and FN-3 showed a much higher stability in their different parameters after being subjected to the thermal fatigue test than that of the rotors manufactured with steel alloys AA-1 and AA-2.

This is a consequence of the notable structural stability of the nodular ferritic cast irons. This can be observed clearly in the micrographs of the samples of a rotor manufactured with cast iron FN-1, shown in Figures 1, 2 and 3.

Figure 1 shows a 500 x micrograph of a part manufactured with cast iron FN-1, treated with 4% Nital, before the thermal fatigue test.

Figure 2 shows a micrograph of the same part, under the same conditions, after 400 heating and cooling cycles under the aforesaid conditions.

Figure 3 shows a micrograph of the same part, under the same conditions, after being subjected to 500 heating and cooling cycles under the aforesaid conditions.

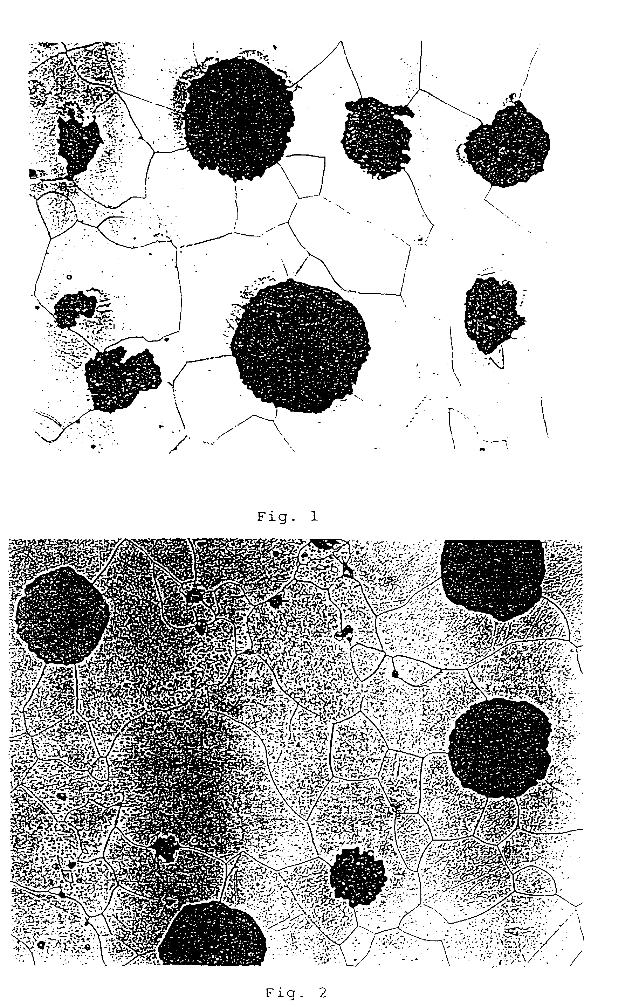

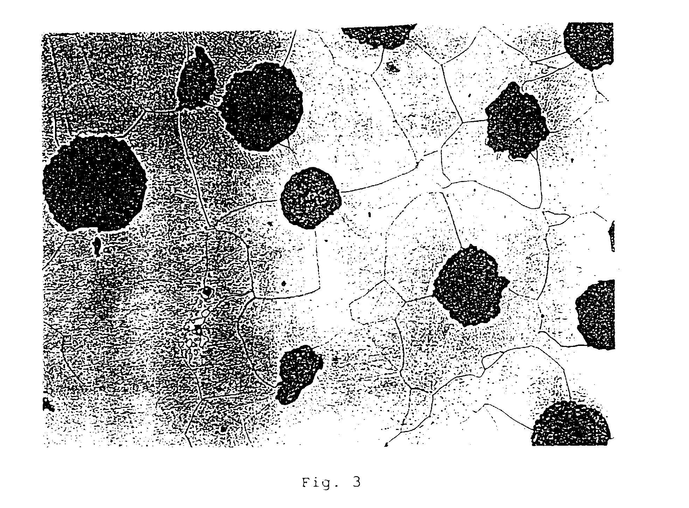

Comparing the micrographs, it can be observed clearly that the metallographic structure of the part has hardly undergone alteration after 400 and 500 heating and cooling cycles.

## Claims

1. Induced rotors for electromagnetic speed reducers, characterized in that they are built with nodular iron casts, with a substantially ferritic matrix, having the following composition expressed as a percentage by weight of their components:
- 2,5 to 4,0 of Carbon
- 1,6 to 4,0 of Silicon
- 0,03 to 0,06 of Magnesium
- Less than 0,3 of Manganese
- Less than 0,3 of Copper
- 0 to 0,7 of Molybdenum
the remaining balance up to 100 being formed by iron, with its habitual impurities in the usual proportions.

2. Induced rotors, according to the claim 1, characterized in that they have wall thicknesses between 3 and 5 mm at the portions corresponding to the ventilation circuits.

## Patentansprüche

1. Induktionsrotoren für elektromagnetische Drehzahlminderer, dadurch gekennzeichnet, daß sie aus sphärolithischem Gußeisen mit einer im wesentlichen ferritischen Matrix aufgebaut sind, welches die folgende Zusammensetzung, ausgedrückt in Gewichtsprozenten, seiner Bestandteile hat:
- 2,5 bis 4,0 Kohlenstoff
- 1,6 bis 4,0 Silizium
- 0,03 bis 0,06 Magnesium
- weniger als 0,3 Mangan
- weniger als 0,3 Kupfer
- 0 bis 0,7 Molybdän,
wobei der Rest auf 100 % durch Eisen mit seinen gewöhnlichen Verunreinigungen in den üblichen Anteilen gebildet ist.

2. Induktionsrotoren gemäß Anspruch 1, dadurch gekennzeichnet, daß sie in den Bereichen, die Lüftungskanälen zugeordnet sind, Wanddicken zwischen 3 und 5 mm aufweisen.

## Revendications

1. Rotors induits pour réducteurs de vitesse électromagnétiques, caractérisés en ce qu'ils sont construits en fonte à graphite sphéroïdal, avec une matrice essentiellement ferritique, ayant la composition suivante, exprimée en pourcentage en poids des constituants :
- 2,5 à 4,0 de carbone
- 1,6 à 4,0 de silicium
- 0,03 à 0,06 de magnésium
- moins de 0,3 de manganèse
- moins de 0,3 de cuivre
- 0 à 0,7 de molybdène
le complément à 100 étant constitué de fer, avec ses impuretés habituelles en les proportions usuelles.

2. Rotors induits selon la revendication 1, caractérisés en ce qu'ils ont une épaisseur de 3 à 5 mm au niveau des portions correspondant aux circuits de ventilation.
